**Europäisches Patentamt**

**European Patent Office**

**Office européen des brevets**

(19)

(11) Veröffentlichungsnummer: **0 149 796**

**A2**

# EUROPÄISCHE PATENTANMELDUNG

(12)

(21) Anmeldenummer: **84115325.7**

(22) Anmeldetag: **13.12.84**

(51) Int. Cl.⁴: **C 05 G 1/00**

(30) Priorität: **23.01.84 DE 8401805 U**

(43) Veröffentlichungstag der Anmeldung:
**31.07.85 Patentblatt 85/31**

(84) Benannte Vertragsstaaten:
**AT BE CH FR GB IT LI LU NL SE**

(71) Anmelder: **Schröder, Herbert**
**Dernbacher Strasse 53**
**D-5431 Ebernhahn(DE)**

(71) Anmelder: **Sippel, Markolf**
**Braunfelser Strasse 78**
**D-6330 Wetzlar(DE)**

(71) Anmelder: **Sippel, Karl-Heinz**
**Zum Weibersgrund 10**
**D-6333 Braunfels 4/Ot Altenkirchen(DE)**

(72) Erfinder: **Sippel, Karl-Heinrich**
**Zum Weibersgrund 10**
**D-6333 Braunfels 4 OT Altenkirchen(DE)**

(74) Vertreter: **Knefel, Siegfried, Dipl.-Math.**
**Wertherstrasse 16 Postfach 1924**
**D-6330 Wetzlar(DE)**

(54) Düngemittelkorn.

(57) Düngemittelkorn, bestehend aus einer festen (abgebundenen) Hülle aus Urgesteinsmehl, welche eine feuchte
Mischung aus Vogel- und/oder Geflügelexkrementen, insbesondere Guano, und einem Fermentationshumus einschließt, wobei die Mischung Mikroorganismen enthält und
zusätzlich geringe Mengen von Stickstoff, Phosphor, Kalium,
Calcium, Magnesium sowie Karbonate und Silikate enthalten
kann und außerdem Spurenelemente von Kobalt, Mangan,
Bor, Eisen, Kupfer, Zink, Molybdän und Huminsäuren.

EP 0 149 796 A2

Beschreibung

Die Erfindung betrifft ein Düngemittelkorn.

Als Düngemittel für Pflanzen wird heute in überwiegendem Maße Kunstdünger auf chemischer Basis verwendet, weil dieser dem Naturdünger, wie Stallmist, Kompost und dergleichen im Hinblick auf das erzielbare Wachstum der Pflanzen überlegen ist. Die Verwendung eines solchen Kunstdüngers zeigt jedoch erhebliche Nachteile.

Bei Verwendung von Kunstdünger ist eine optimale Dosierung weder bei den im Dünger enthaltenen Kern- noch Spurenstoffen möglich. Deshalb ist bei der Düngung eine Über- oder Unterdosierung die Regel.
Bei einer Unterdosierung wird das notwendige Pflanzenwachstum nicht erreicht, da sich insbesondere Kunstdünger aus dem Boden auswäscht, was zugleich zu einer Umweltbelastung führt. Eine Überdosierung bedeutet eine nicht erwünschte Kostensteigerung. Zugleich vergrößert sich der Auswascheffekt, und die Umwelt wird besonders stark belastet.

Es hat sich ferner gezeigt, daß bei Verwendung von Kunstdünger ein Gareschwund eintritt. Mit Gare wird der für den Pflanzenwuchs günstigste Zustand des Bodens bezeichnet. Dieser Gareschwund wirkt sich auf den Gehalt an Wasser, an Feinerde und an den notwendigen Bakterien aus. Insbesondere findet eine zunehmende Bodenverdichtung statt und nicht nur in der Oberfläche des Bodens sondern auch im Unterboden (Sohle). Die Bodenverdichtung bewirkt, daß der Gasaustausch zur Luft gehemmt wird, das heißt, die Adsorption der Gase der Luft im Boden wird mehr und mehr unterbunden. Damit werden der Boden und die Pflanze sehr stark abhängig von der Witterung, nämlich von Frost, Niederschlägen, Trockenheit und anderen Witterungseinflüssen. Außerdem erfolgt eine fortlaufende Zunahme des Schädlings- und Krankheitsbefalles sowie eine Abnahme der Resistenz der Pflanzen, was über einen längeren Zeitraum einen Schwund der biologischen Qualitätszeichen der Pflanzen mit sich bringt. Eine Abhilfe ist in dieser Hinsicht nicht mit einem größeren Düngeraufwand zu erreichen, weil sich dieser Aufwand im Ertrag nicht niederschlägt.

Der Schwund der Fruchtbarkeit bewirkt einen Sortenabbau und führt damit zum Zwang eines häufigen Saatwechsels. Da die Pflanzen nicht mehr so widerstandsfähig sind, ist ein zunehmender Aufwand an Pflanzenschutzmitteln erforderlich, der wiederum zu einer zunehmenden Toxisierung des Bodens und der Pflanzen führt. Dies wirkt sich letzten Endes auf den Endverbraucher, das heißt auf Mensch und Tier nachteilig aus.

Aufgabe der vorliegenden Erfindung ist es, ein Düngemittelkorn anzugeben, das die Bodengare verbessert, ohne daß Dosierungsprobleme bei Verwendung des Düngemittels auftreten, das heißt, der Boden soll, wenn er verbraucht ist, wieder aufgebaut werden, und dieser Aufbau soll letztlich stabilisiert werden, und zwar sowohl in den oberen als auch in den unteren Bodenschichten.

Diese Aufgabe wird durch die Verwendung des Düngemittelkornes des Anspruches 1 gelöst.

Wird das erfindungsgemäße Düngemittelkorn in den Boden eingebracht, zerfällt es, und das Düngemittel zeigt die nachfolgend beschriebene Wirkung.

Das Urgesteinsmehl verhindert das Auswaschen der Nährstoffe aus dem Boden, und es reguliert gleichzeitig den Säurehaushalt des Bodens, insbesondere wird saurer Industrieregen neutralisiert. Hinzu kommt, daß das Urgesteinsmehl zusammen mit dem Fermentationshumus einer Verkrustung des Bodens entgegenwirkt. Mit anderen Worten, der Boden bleibt locker, so daß die Gasadsorption aus der Luft voll durchgreift und auch die unteren Bodenschichten voll mit Sauerstoff versorgt werden. Damit kann die Mischung aus Vogelexkrementen und Fermentationshumus beim Pflanzenwuchs voll durchschlagen. Der Humuswert des erfindungsgemäßen Düngemittels beträgt, wie gefunden wurde, etwa das 30- bis 50-fache gegenüber Stallmist. Weiterhin bewirkt das Urgesteinsmehl in Verbindung mit dem Fermentationshumus, daß die Erdporen verkleinert werden, so daß der Boden wesentlich mehr Wasser speichern kann als vorher. Dies wirkt sich insbesondere bei sandigen Böden vorteilhaft aus. Die Pflanzen können je nach Bedarf das im Boden gebundene Wasser aufnehmen. Außerdem können die Kolloide des Düngemittels Wasser aus der Atmosphäre binden, so daß der Pflanzenwuchs nicht ausschließlich von einer genügenden Bewässerung abhängig ist. Tonige Böden werden darüber hinaus in ihrer Struktur aufgelockert, und die Bildung eines Ton-Humus-Komplexes wird erleichtert. Die Folge ist eine Vergrößerung des Porenvolumens und eine Verbesserung der Wasser- und Luftdurchlässigkeit.

Damit kommen auch die Mikroorganismen, wie Bakterien und Pilze, voll zur Wirkung. Unter den Bakterien sind es vorwiegend die freilebenden Stickstoff-Fixierer, die die Fähigkeit besitzen, den molekularen Luftstickstoff ohne jegliche Symbiose zu binden. Es sind dies insbesondere die Schizomyceten (Stickstoffbacter, Beijerinckis, Closteridium usw.). Zu dieser Gattung gehören auch die aeroben und anaeroben Bakterien, welche ein beachtliches Anpassungsvermögen sowohl an das Klima als auch an den pH-Wert des Bodens besitzen. Als Energiequelle dient ihnen Kohlenstoff der Vegetationsrückstände und/oder des Fermentationshumus und des Vogeldüngers. Das weite Spektrum der freien Stickstoff-Fixierer ermöglicht eine befriedigende Stickstoffernährung der Pflanzen, auch im Hinblick auf eine kontinuierliche Versorgung, da diese Stickstoffquelle immer aktiv ist und aktiv bleibt.

Eine wesentliche Gruppe der Mikroorganismen, welche im Fermentationshumus enthalten ist, wird durch die Phosphorbakterien (Bacillus megatherium) gebildet, welche phosphorlösende Aktivitäten im Boden durchführen. Die Phosphorbakterien schließen indirekt unlösbare Phosphate auf, indem sie $CO_2$ und organische Säuren bilden. Der Löslichkeitsmechanismus wird durch die Entwicklung von $CO_2$ hervorgerufen, das während des Abbauprozesses freigesetzt wird. $CO_2$ vereinigt sich mit Wasser im Boden zu $H_2CO_3$, welches die kohlensäurelöslichen Phosphate angreift, so daß $PO_43$-Ionen von den Pflanzenwurzeln aufgenommen werden.

Des weiteren vorhandene Eisenbakterien bewirken eine Reduktion von 3-wertigem Eisen zu 2-wertigem Eisen, das von der Pflanze leicht aufgenommen werden kann.

Ferner bauen im Fermentationshumus vorhandene Aktinomyceten Zellulose und Lignin ab. Diese organischen Substanzen sind von den Bakterien nicht abbaubar. Die Aktinomyceten bewirken jedoch, daß Antibiotika und Vitamine, wie Vitamin B, produziert werden. Diese Stoffe wirken stimulierend auf das Wachstum der Pflanze und auf die Mikroflora.

Pilze, wie Schimmelpilze (Aspergillus niger und Penicillium crysogenes) und Hefen (Saccharomyces cerevisae, Turulopsis utilis) verleihen dem Humusdünger die Fähigkeit, Na+ und K+ sowie Kohlenstoff in Stickstoffverbindungen umzuwandeln.

Die Huminsäuren dienen als Stickstoff-Reservatoren. Sie geben den Stickstoff langsam ab und enthalten verschiedene Wachstumsfaktoren, die auf die Physiologie der Pflanzen stimulierende Wirkung ausüben. Die Pflanze nimmt Huminsäuren auf,

wodurch die Entwicklung des Wurzelsystems gefördert wird.

Bei Verwendung des erfindungsgemäßen Düngers werden ferner im Boden oder im Düngemittel vorhandene Makroelemente, wie Stickstoff, Phosphor, Kalium, im Gegensatz zu dem Stickstoff in mineralischen Düngern nicht ausgewaschen. Phosphor und Kalium werden durch die organische proteinhaltige Form nicht festgelegt oder blockiert. Die Elemente selbst werden durch die Mikroben freigesetzt, wobei hochmolekulare Verbindungen bis zur Aminosäurenstufe getrennt werden. Diese Verrottung liefert Energie, welche von den Pflanzen aufgenommen wird.

Es hat sich gezeigt, daß ein Kilogramm organischer Stickstoff, der durch das erfindungsgemäße Düngemittel gewonnen wird, wirksamer ist und vier- bis fünfmal effektiver als ein Kilogramm chemisch gebundener Stickstoff in Kunstdüngern. Das gleiche gilt für Phosphor und Kalium.

Die weiterhin im erfindungsgemäßen Dünger enthaltenen Mikroelemente benötigen die Pflanzen und die Mikroorganismen als Katalysatoren für die enzymatischen Prozesse.

Soweit die genannten Stoffe im Fermentationshumus, in den Vogelexkrementen und/oder im Urgesteinsmehl nicht vorhanden sind, werden sie dem Düngemittel, insbesondere dem Fermentationshumus, in Mengen zugefügt, so daß sie in den in den Unteransprüchen angegebenen Grenzen liegen.

Der erfindungsgemäße Dünger wird vorteilhaft wie folgt gewonnen:

Die Vogel- und/oder Geflügelexkremente werden mit dem Fermentationshumus, wie Kompost, in der angegebenen Menge vermischt, und es wird der Mischung, falls diese Mischung von vornherein nicht feucht genug ist, Wasser zugesetzt, üblicherweise etwa 10 %, einerseits, damit die Mischung zu Kügelchen geformt werden kann und andererseits, damit die Mikroorganismen existieren können.

In einem rotierenden Teller wird die angefeuchtete
Mischung zu Körnchen (Kügelchen) ausgerollt, welche einen
Durchmesser von 0,5 bis 5 mm annehmen.
Anschließend wird das Urgesteinsmehl hinzudosiert. Dieses
legt sich zunächst als trockene Hülle um die Kügelchen herum.
Das Mehl entzieht dann jedoch den Kügelchen eine gewisse Menge Wasser, das dazu ausreicht, das Urgesteinsmehl zum Abbinden zu bringen, so daß die Mischung aus Fermentationshumus
und Geflügelexkrementen von einer betonartigen Hülle umgeben
wird. Die Kügelchen bilden jetzt ein Granulat.

Als Geflügelexkremente kann unter anderem Guano verwendet oder beigemischt werden.

Der Zusatz an Wasser zu der Mischung aus Fermentationshumus und Vogelexkrementen soll so groß sein, daß nach dem
Abbinden des Urgesteinsmehles im Innern der Kügelchen etwa
20 % Feuchtigkeit verbleiben, eine Menge, die ausreicht, die
Mikroorganismen nicht absterben zu lassen.

Damit das so entstandene Granulat im Innern seine
Feuchtigkeit behält, wird es zur Lagerung wasserdicht verpackt. Die Temperatur soll sowohl beim Herstellungsverfahren
als auch bei der Lagerung unter 45$^{\circ}$ C bleiben, weil sonst
Mikroorganismen absterben. Außerdem muß vermieden werden,
daß beim Verfahrensablauf Sonne einstrahlt, da die Mikroorganismen im allgemeinen lichtscheu sind. Aus Sicherheitsgründen wird man bei der Lagerung deshalb auch für eine
Lichtabschirmung sorgen.

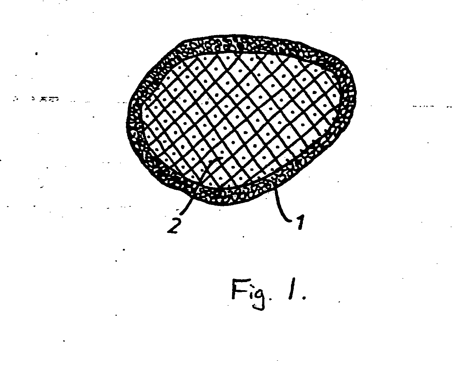

Auf der Zeichnung ist ein Ausführungsbeispiel der Erfindung dargestellt, und zwar als Schnitt durch das Düngemittelkorn.

Das Düngemittelkorn besteht aus einer betonartig abgebundenen Hülle 1 aus Urgesteinsmehl, welche eine feuchte Mischung 2 aus Vogel- und/oder Geflügelexkrementen, wie Guano, und einen Fermentationshumus einschließt.

## Schutzansprüche

1. Düngemittelkorn, dadurch gekennzeichnet, daß es aus einer festen (abgebundenen) Hülle aus Urgesteinsmehl besteht, welche eine feuchte Mischung aus Vogel- und/oder Geflügelexkrementen und einem Fermentationshumus einschließt.

2. Düngemittelkorn nach Anspruch 1, dadurch gekennzeichnet, daß die feuchte Mischung aus 40 bis 60 % Vogel- und/oder Geflügelexkrementen und 25 bis 50 % Fermentationshumus besteht und die Hülle aus 20 bis 30 % Urgesteinsmehl, bezogen auf die Gesamtmasse.

3. Düngemittelkorn nach Anspruch 1, dadurch gekennzeichnet, daß es 2 bis 6 % Stickstoff (N), 2 bis 5 % Phosphor $(P_2O_5)$, 2 bis 5 % Kalium $(K_2O)$, 3 bis 5 % Calzium (Ca), 0,3 bis 0,6 % Magnesium (Mg), 13 bis 15 % Karbonate und Silikate sowie 4,5 bis 8 Milliarden Mikroorganismen pro Gramm enthält.

4. Düngemittelkorn nach Anspruch 1, dadurch gekennzeichnet, daß der Fermentationshumus Spurenelemente von Kobalt, Mangan, Bor, Eisen, Kupfer, Zink, Molybdän und Huminsäuren enthält.

S G 769

5. Düngemittelkorn nach Anspruch 1, dadurch gekennzeichnet, daß die Vogelexkremente unter anderem oder wenigstens teilweise aus Guano bestehen.

6. Düngemittelkorn nach Anspruch 1, dadurch gekennzeichnet, daß die feste Hülle aus Silikaten der Devonzeit (Diabas, Basalt) besteht.

7. Düngemittelkorn nach Anspruch 1, gekennzeichnet durch eine feuchtigkeits- und/oder lichtisolierende Verpackung.

Kn/s
201184

Fig. 1.